# EUROPÄISCHE PATENTSCHRIFT

(11) **EP 1 125 072 B1**
(45) Veröffentlichungstag und Bekanntmachung des Hinweises auf die Patenterteilung: **26.11.2003**
(21) Anmeldenummer: 99953753.3
(22) Anmeldetag: 06.10.1999
(51) Int. Cl.: F16J 15/00, F16H 57/04, H02K 5/124

(54) **DICHTSYSTEM FÜR EINE AUS MOTOR UND GETRIEBE BESTEHENDE ANTRIEBSEINHEIT**
SEALING SYSTEM FOR A DRIVE UNIT CONSISTING OF A MOTOR AND A TRANSMISSION
SYSTEME ETANCHE POUR UNE UNITE D'ENTRAINEMENT CONSTITUEE D'UN MOTEUR ET D'UNE TRANSMISSION

(30) Priorität: 26.10.1998 DE 19849237
(43) Veröffentlichungstag der Anmeldung: 22.08.2001
(73) Patentinhaber: Kone Corporation, 00330 Helsinki (FI)
(72) Erfinder: THIEL, Alfred, D-45549 Sprockhövel (DE)
(74) Vertreter: Spannagel, Hans-Achim
(86) Internationale Anmeldenummer: EP9907513
(87) Internationale Veröffentlichungsnummer: WO00025047

(56) Entgegenhaltungen:
- DE-A- 4 242 762
- DE-C- 3 238 780
- HAAS W ET AL: "BERUEHRUNGSFREIE WELLENDICHTUNGEN FUER FLUESSIGKEITSBESPRITZTE DICHTSTELLEN" KONSTRUKTION,DE,SPRINGER VERLAG. BERLIN, Bd. 39, Nr. 3, 1987, Seiten 107-113, XP000857132 ISSN: 0720-5953 in der Anmeldung erwähnt

## Beschreibung

Die Erfindung betrifft ein Dichtsystem für aus Motoren, insbesondere schnell laufenden Motoren, mit direkt angeflanschtem Getriebe gebildete Antriebseinheiten, insbesondere für Personenförderanlagen, wie Rolltreppen und Rollsteige.

Durch die DE 42 42 762 ist ein Getriebe insbesondere für den Antrieb von Rolltreppen, Rollsteigen oder dgl. bekannt, dessen Getriebeein- und/oder - ausgangswelle kegelrollengelagert und axial nach außen durch mindestens eine Wellendichtung abgedichtet ist, wobei axial zwischen dem Kegelrollenlager und der Wellendichtung ein Schmiermittelförderelement vorgesehen ist. Konstruktionsbedingt pumpt das Kegelrollenlager das Schmieröl jedoch ab. Das Schmiermittelförderelement ist durch ein das bzw. die Kegelrollenlager haltendes bzw. haltende Bauteile gebildet, wobei das Bauteil durch eine mit Schleuderelementen versehene Einstellmutter gebildet ist. Die Wellendichtung besteht aus mehreren axial vorspannbaren Kammern zwischen sich bildenden Dichtelementen. Ziel dieser Druckschrift war es, die Leckage der Getriebewelle eines Getriebes, insbesondere eines Schneckengetriebes, weitestgehend zu eliminieren und somit die Standzeit zu erhöhen, wobei auch bei eintretender Mangelschmierung eine Beschädigung der Dichtlippe bzw. Dichtlippen der Wellendichtung sicher vermieden werden soll. Schneckengetriebe stellen in der Regel langsam laufende Getriebeelemente dar, so daß es hier unter Umständen problematisch ist, Schmiermittel an die jeweilige Dichtlippe heranzuführen, um diese somit vor vorzeitigem Ausfall zu bewahren.

Der DE-C 32 38 780 ist ein Öl-Schmiersystem für Getriebe mit wenigstens einer Ölfangtasche und mit einer zu der Umfangsoberfläche einer sich drehenden Getriebewelle hin offenen Sammelringnut für von einer auf der Getriebewelle angeordneten Pumpe gefördertes Schmiermittel bekannt, wobei der Pumpe radiale Kanäle zugeordnet sind und die Ansaugstelle der Pumpe mit der Ölfangtasche in Verbindung steht, und wobei von der Sammelringnut wenigstens ein Kanal in das Innere der Getriebewelle zu wenigstens einer im Inneren der Getriebewelle angeordneten Schmierstelle führt. Die Pumpe ist als Fliehkraftpumpe ausgebildet und enthält ein mit Flügeln versehenes, im wesentlichen scheibenförmiges Flügelrad. Die radialen Kanäle sind als von einem radial außen an der Fliehkraftpumpe angeordneten Druckölsammelraum ausgehende gehäusefeste radial nach innen laufende Umlenkkanäle ausgebildet, die mit der Sammelringnut in Verbindung stehen.

Der DE-Zeitschrift Konstruktion 39 (1987), Heft 3, Seiten 107 - 113 sind berührungsfreie Wellendichtungen für flüssigkeitsbespritzte Dichtstellen zu entnehmen. Diese Druckschrift vermittelt einen allgemeinen konstruktionen Überblick der zum Einsatz gelangenden berührungslos arbeitenden Dichtsysteme und vermittelt Hinweise für die Gestaltung des Einbauumfeldes des Dichtsystemes, des Dichtelementes selbst sowie der Flüssigkeitsrückführung. Darüber hinaus wird jedoch auch auf noch ungelöste Aufgaben im Hinblick auf das unerwünschte Einströmen von Staub in den abzudichtenden Raum hingewiesen.

Ziel des Erfindungsgegenstandes ist es, ein einfach bauendes Dichtsystem für aus Motoren mit direkt angeflanschtem Getriebe gebildeten Antriebseinheiten, insbesondere für schnell laufende Motoren, dahingehend weiterzubilden, daß einerseits eine Leckage während Transport (Verkantung) und Montage der Personenförderanlage sicher vermieden wird und zum anderen selbst bei späterem Ausfall der Dichtung im Betriebszustand ein Auslaufen des Schmieröles aus dem Getriebe in Richtung des Motors sicher vermieden wird.

Dieses Ziel wird erreicht durch ein Dichtsystem für aus Motoren, insbesondere schnell laufende Motoren mit direkt angeflanschtem Getriebe gebildete Antriebseinheiten, insbesondere für Personenförderanlagen, wie Rolltreppen und Rollsteige, bestehend aus mindestens einem als Radialwellendichtung ausgebildeten Dichtelement, mindestens einem Schleuderelement sowie mindestens einem Deck- und Saugelement, wobei das Deck- und Saugelement getriebeseitig vor dem Dichtelement angeordnet ist, und wobei ein im Bereich des Schleuderelementes vorgesehener Schmierölsammelraum über mindestens einen in Richtung des Deck- und Saugelementes verlaufenden Kanal mit dem Getrieberaum verbunden ist, der im saugseitigen Bereich des Deck- und Saugelementes etwa oberhalb des Ölspiegels vorgesehen ist.

Vorteilhafte Weiterbildungen des Erfindungsgegenstandes sind den Unteransprüchen zu entnehmen.

Der Erfindungsgegenstand bietet einerseits die Möglichkeit, die Personenförderanlage, wie eine Rolltreppe oder einen Rollsteig, unabhängig von ihren jeweiligen Neigungswinkeln bewegen und transportieren zu können, und andererseits infolge des Schmierölrückführungssystems selbst bei Ausfall des zumindest in Einbauzustand berührend arbeitenden Dichtelementes im Betriebszustand ein Austreten von Schmieröl aus dem Getriebe in Richtung des Motors sicher zu verhindern.

Der Ölspiegel innerhalb des Getrieberaumes kann hierbei auf ein Niveau abgesenkt werden, das im fertig montierten Zustand der Personenförderanlage unterhalb der größten Umfangserstreckung des Deck- und Saugelementes liegt, so daß auch hier für jedes Getriebe einige Liter Schmiermittel eingespart werden können. Das Deck- und Saugelement verhindert infolge seiner räumlichen Anordnung sowie seiner sich in Richtung des Dichtelementes verjüngenden äußeren Umfangsfläche einerseits, daß Schmieröl (Schleuderöl) außerhalb des Ölspiegels ständig unter mehr oder weniger hohem Druck in Richtung des Dichtelementes gefördert wird und dient andererseits dazu, das tatsächlich durch das Dichtelement noch hindurchgetretenes Schmiermittel über die Schleuderscheibe in Richtung des Schmierölsammelraumes und über den Kanal wieder in Richtung des Getrieberaumes angesaugt wird. In beiden Fällen wird die Fliehkraft des Deck- und Saugelementes für den jeweiligen Zweck vor Ort ausgenutzt.

Mit dem Erfindungsgegenstand wird somit ein Schmierölzirkulationssystem gebildet, das selbst bei ausgefallenem Dichtelement im Betriebszustand noch wirksam ist und in jedem Fall ein Austreten von Schmieröl aus dem Getriebe in Richtung des direkt angeflanschten Motors sicher verhindert. Bei dem vorzugsweise als Einbaueinheit ausgebildeten Dichtsystem handelt es sich um ein einstückig ausgebildetes Bauteil, bestehend aus dem Deck- und Saugelement und dem Schleuderelement, wobei letzteres auf einem radial abgestzten Schenkel die bei Bedarf mehrlippig ausgebildete Radialwellendichtung trägt.

Infolge des so geschaffenen Zirkulationssystems für das ggf. tatsächlich austretende Schmieröl, ist das Dichtelement im Betriebszustand eigentlich entbehrlich und dient somit faktisch nur für Transport- und Montagezwecke, dies in Wirkverbindung mit einer ggf. vorhandenen Transportsicherung, die eine wirksame Trennung des Schmierölsammelraumes vom sich in Richtung des Getrieberaumes erstreckenden Kanals gewährleistet.

Die Dichtstelle zwischen einem insbesondere schnell laufenden Motor und einer mit Synthetiköl gefüllten Getriebeeinheit ist aus folgendem Grund problematisch anzusehen:

Synthetiköl verträgt sich nicht mit jedem Dichtlippenwerkstoff, wobei auch nicht jeder Dichtlippenwerkstoff gegen hohe Temperaturen, wie sie insbesondere bei schnell laufenden Motorabtriebswellen auftreten, beständig ist.

Bei Stufen- bzw. Paletteneinbau sowie deren Wechsel wird im Tipp- Betrieb leict eine Temperatur vo mehr als 100 Grad Celsius erreicht. Dies im Hinblick darauf, daß der Motor in der Kürze der Zeit zwar hochläuft, der zugehörige Lüfter dann jedoch nicht in der Lage ist, die notwendige Kühlleistung zu erbringen. so daß sich hier eigentlich ein Dichtlippenwerkstoff auf der Basis von Viton anbieten würde. Dieser hochtemperaturbeständige Dichtlippenwerkstoff ist jedoch nicht auf Dauer gegen Synthetiköl beständig, so daß zwar dem einen Parameter Rechnung getragen wird, dem anderen jedoch nicht.

Radialwellendichtringe auf NBR-Basis sind zwar über ihre Standzeit gesehen weitestgehend beständig gegen Synthetiköl, fallen jedoch bei den genannten Temperaturen innerhalb relativ kurzer Standzeiten aus.

Der Wellendichtring, auf den im Betriebszustand gut verzichtet werden kann, da ein Schmierölrücktransport zum Getrieberaum durch die anderen Bauteile des Dichtsystems gewährleistet ist, kann somit als preiswertes NBR-Teil ausgeführt werden, so daß das Dichtsystem an sich in diesem problembehafteten Bereich äußerst preiswert hergestellt und als Einbaueinheit montiert werden kann. Eventuell notwendige Nachrüstungen sind mit dem als Montageeinheit ausgebildeten erfindungsgemäßen Dichtsystem ebenfalls denkbar.

Der Erfindungsgegenstand ist anhand eines Ausführungsbeispieles in der Zeichnung dargestellt und wird wie folgt beschrieben. Es zeigen:
- Figur 1 -: Antriebssystem einer Personenförderanlage, wie z. B. einer Rolltreppe
- Figur 2 -: Teildarstellung des Übergangsbereiches Motor/Getriebe in Verbindung mit dem erfindungsgemäßen Dichtsystem.
- Figur 3 -: alternative Teildarstellung des das erfindungsgemäße Dichtsystem beinhaltenden Übergangsbereiches.

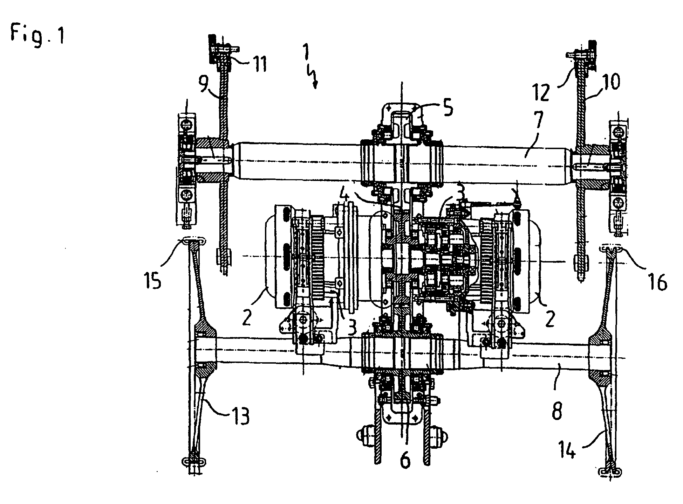

Figur 1 zeigt ein Antriebssystem 1 für eine nicht weiter dargestellte Personenförderanlage, wie z. B. eine Rolltreppe. Das Antriebssystem 1 beinhaltet eine in diesem Beispiel aus Motor 2 und Getriebe 3 in klappsymmetrischer Anordnung bestehende Antriebseinheit, wobei das Getriebe 3 ein mehrstufiges Planetengetriebe ist und der Motor 2 durch einen schnell laufenden Elektromotor gebildet wird. Über Abtriebselemente 4,5,6 steht die Antriebseinheit 2,3 mit Wellen 7,8 in Wirkverbindung. Die Welle 7 trägt Umlenkräder 9,10 für nur angedeutete Transportketten 11,12 für nicht weiter dargestellte Stufen. Die Welle 8 trägt Umlenkräder 13,14 für nur angedeutete Handläufe 15,16.

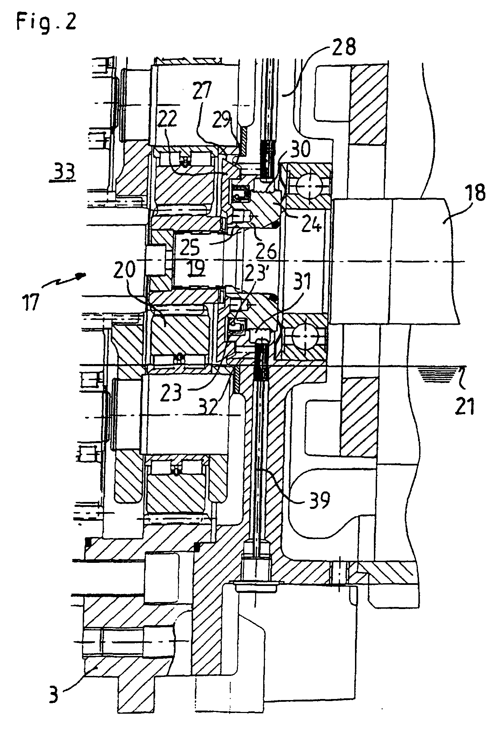

Figur 2 zeigt als Teildarstellung den Übergangsbereich 17 vom hier nicht weiter erkennbaren Motor zum Getriebe 3. Erkennbar ist die Motorabtriebswelle 18 (z. B. n = 1800 U/min), die im Bereich ihres freien Endes über ein Ritzel 19 mit der ersten Stufe 20 eines mehrstufigen Planetengetriebes 3 in Wirkverbindung steht. Der im Getriebe 3 vorhandene Ölspiegel ist mit dem Bezugszeichen 21 versehen. Das erfindungsgemäße Dichtsystem selber besteht aus den Bauteilen Deck- und Saugelement 22, Dichtelement 23 sowie Schleuderelement 24, wobei das Deck- und Saugelement 22 auf einem Ansatz 25 des Schleuderelementes 24 aufgepreßt ist und mit dem radial geringer dimensiomierten Axialschenkel 26 des Schleuderelementes 24 in Wirkverbindung steht. Das Dichtelement 23 ist in diesem Beispiel als Radialwellendichtring auf NBR-Basis ausgebildet. Das getriebeseitig angeordnete Deck- und Saugelement 22 weist eine sich konisch in Richtung des Dichtelementes 23 verjüngende äußere Umfangsfläche 27 auf, wobei zwischen dem Gehäuseteil 28 des Getriebes 3 und dem Deck- und Saugelement 22 ein labyrinthartiger Spalt 29 gebildet wird. Das scheibenförmig ausgebildete Schleuderelement 24 weist im Bereich seiner äußeren Umfangsfläche ein labyrinthartig ausgebildetes Kanalsystem 30 auf, das ggf. durch das Dichtelement 23 (Dichtlippe 23') hindurchtretende Schmieröl in den das Schleuderelement 24 umgebenden Raum 31 führt, wobei dieses dann im Betriebszustand über einen etwa axial verlaufenden Kanal 32 wieder in Richtung des Getriebeinnenraumes 33 zurücktransportiert werden kann. Das Deck- und Saugelement 22 dient somit zweierlei Zwecken, nämlich zum einen infolge der geometrischen Form der äußeren Umfangsfläche 27, bedingt durch die Fliehkraft, außerhalb des Ölspiegels Schmieröl von dem Dichtelement 23 weitestgehend fernzuhalten und andererseits ebenfalls infolge der Fliehkraft, etwa auf dem Niveau des Ölspiegels 21 einen Ansaugeffekt zu bewirken, mittels welchem im Sammelraum 31 befindliches Schmieröl über den Kanal 32 wieder in den Getriebeinnenraum 33 zurücktransportiert wird.

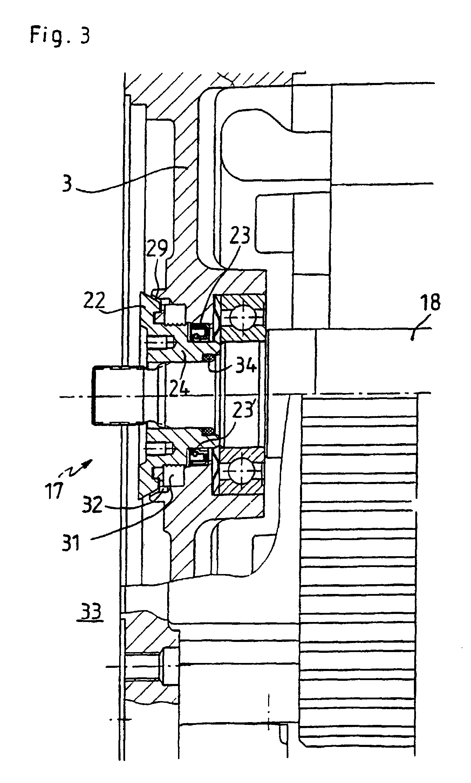

Figur 3 zeigt eine alternative Ausgestaltung des Dichtsystems im Übergangsbereich 17 von der schnell laufenden Abtriebswelle 18 des hier nicht erkennbaren Motors in das Getriebe 3. Die wesentlichen Bauteile wurden bereits in Figur 2 in entsprechender Weise gewürdigt. Infolge der geometrischen Ausgestaltung des Deck- und Saugelementes 22 wird einerseits verhindert, daß wesentliche Schmierölanteile in den Bereich des Labyrithes 29 und somit in den Bereich des Dichtelementes 23, insbesondere der Dichtlippe 23', gelangen können. Wie bereits angesprochen, ist es für die Betriebsweise des Erfindungsgegenstandes unerheblich, ob das Dichtelement 23 vorhanden ist oder nicht, da eine Rezirkulierung des Schmieröles in diesem Zustand stattfindet. Die tatsächlich noch in den Bereich des Dichtelementes 23 gelangenden Schmierölanteile werden selbst bei Ausfall der Dichtlippe 23' sowie der nachgeschalteten Lippe 38 über das im Bereich des Schleuderelementes 24 vorgesehene Kanalsystem 30 in den Sammelraum 31 transportiert und von dort über den Kanal 32 in den Getriebeinnenraum 33 zurückbewegt. Das Deck- und Saugelement 22 bildet mit dem Schleuderelement 24 ein einstückiges Bauteil, das über ein statisch wirkendes Dichtelement 34 gegenüber der Welle 18 abgedichtet ist.

Gegenüber Fig. 2 wird hier eine noch einfacher bauende Einbaueinheit gebildet, bei der darüber hinaus auch noch auf die Transportsicherung verzichtet werden kann.

## Patentansprüche

1. Dichtsystem für aus Motoren, insbesondere schnell laufende Motoren (2) mit direkt angeflanschtem Getriebe (3) gebildete Antriebseinheiten, insbesondere für Personenförderanlagen, wie Rolltreppen und Rollsteige, bestehend aus mindestens einem als Radialwellendichtung ausgebildeten Dichtelement (23), mindestens einem Schleuderelement (24) sowie mindestens einem Deck- und Saugelement (22), wobei das Deck- und Saugelement (22) getriebeseitig vor dem Dichtelement (23) angeordnet ist, und wobei ein im Bereich des Schleuderelementes (24) vorgesehener Schmierölsammelraum (31) über mindestens einen in Richtung des Deckund Saugelementes verlaufender Kanal (32) mit dem Getrieberaum (33) verbunden ist, der im saugseitigen Bereich des Deck- und Saugelementes etwa oberhalb des Ölspiegels vorgesehen ist.

2. Dichtsystem nach Anspruch 1, **dadurch gekennzeichnet, daß** das Deckund Saugelement (22) scheibenförmig ausgebildet ist, und daß die äußere Umfangsfläche (27) des Deck- und Saugelementes (22) in Richtung des Dichtelementes (23) sich verjüngend vorgesehen ist.

3. Dichtsystem nach Anspruch 1 oder 2, **gekennzeichnet durch** ein sich getriebeseitig zwischen dem Deck- und Saugelement (22) und dem Dichtelement (23) erstreckendes Labyrinth (29).

4. Dichtsystem nach einem der Ansprüche 1 bis 3, **dadurch gekennzeichnet, daß** das Schleuderelement (24) ein labyrinthartig ausgebildetes Kanalsystem (30) beinhaltet, das Schmieröl in Richtung des Schmierölsammelraumes (31) transportiert.

5. Dichtsystem nach einem der Ansprüche 1 bis 4, **dadurch gekennzeichnet, daß** das Schleuderelement (24) im Querschnitt winkelförmig ausgebildet ist, daß der radial größer dimensionierte Schenkel das Kanalsystem (30) beinhaltet, und daß der radial geringer dimensionierte Schenkel (26) als Dichtfläche für die insbesondere mehrlippig (23', 38) ausgebildete Radialwellendichtung vorgesehen ist.

6. Dichtsystem nach einem der Ansprüche 1 bis 5, **dadurch gekennzeichnet, daß** das Schleuderelement (24) über mindestens ein statisch wirkendes Dichtelement mit der Motorabtriebswelle (18) verbunden ist.

7. Dichtsystem nach einem der Ansprüche 1 bis 6, **dadurch gekennzeichnet, daß** das Deck- und Saugelement (22) mit dem Schleuderelement (24) einstückig ausgebildet ist.

8. Dichtsystem nach einem der Ansprüche 1 bis 7, **dadurch gekennzeichnet, daß** die Bauteile Schleuderelement (24), Dichtelement (23) sowie Deckund Saugelement (22) als Einbaueinheit ausgebildet sind.

9. Dichtsystem nach einem der Ansprüche 1 bis 8, **dadurch gekennzeichnet, daß** der Ölspiegel (21) im Getrieberaum (33) unterhalb der im Einbauzustand größten umfangsmäßigen Erstreckung des Deck- und Saugelementes (22) vorgesehen ist.

10. Dichtsystem nach einem der Ansprüche 1 bis 9, **gekennzeichnet durch** eine den Kanal (32) gegenüber dem Schmierölsammelraum (31) für Transport- und Montagezwecke absperrende, im Einbauzustand der Personenförderanlage entfernbare Transportsicherung (39).

## Claims

1. A sealing system for driving units composed of motors, especially fast running motors (2) having a directly flanged gear (3), especially for pedestrian conveyors, such as escalators and moving walkways, composed of at least one sealing element (23) formed as rotary shaft seal, at least one centrifugal element (24) as well as at least one cover and suction element (22), wherein the cover and suction element (22) is placed on the gear side in front of the sealing element (23), and wherein a lubricating oil collector (31 ) provided in the region of the centrifugal element (24) is connected to the gear space (33) via at least one channel (32), which runs into the direction of the cover and suction element, the gear space being provided on the suction side of the cover and suction element, approximately above the oil level.

2. A sealing system according to claim 1, **characterized in that** the cover and suction element (22) is disk shaped, and that the external circumferential surface (27) of the cover and suction element (22) tapers in the direction of the sealing element (23).

3. A sealing system according to claim 1 or 2, **characterized by** a labyrinth (29), which extends on the gear side between the cover and suction element (22) and the sealing element (23).

4. A sealing system according to one of the claims 1 through 3, **characterized in that** the centrifugal element (24) includes a labyrinth like channel system (30), which transports the lubricating oil in the direction of the lubricating oil collector (31 ).

5. A sealing system according to one of the claims 1 through 4, **characterized in that** the cross section of the centrifugal element (24) is angular, that the radially longer dimensioned leg includes the channel system (30), and that the radially shorter dimensioned leg (26) is provided as sealing surface for the rotary shaft seal, which in particular comprises a number of lips (23', 38).

6. A sealing system according to one of the claims 1 through 5, **characterized in that** the centrifugal element (24) is connected to the driven motor shaft (18) via at least one statically acting sealing element.

7. A sealing system according to one of the claims 1 through 6, **characterized in that** the cover and suction element (22) is integrally formed with the centrifugal element (24).

8. A sealing system according to one of the claims 1 through 7, **characterized in that** the components centrifugal element (24), sealing element (23) as well as cover and suction element (22) form an assembly unit.

9. A sealing system according to one of the claims 1 through 8, **characterized in that** the oil level (21) in the gear space (33) is provided beneath the largest circumferential extension of the cover and suction element (22) in the assembled state.

10. A sealing system according to one of the claims 1 through 9, **characterized by** a transport safety device (39), which blocks the channel (32) towards the lubricating oil collector (31) for transport and assembly purposes, and which can be removed in the assembled state of the pedestrian conveyor.

## Revendications

1. Système d'étanchéité pour des unités d'entraînement composées des moteurs, notamment des moteurs (2), qui tournent vite, et qui ont un engrenage (3) directement fixé par bride, notamment pour des installations de transport de personnes, telles que des escaliers et des trottoirs roulants, composé d'au moins un élément d'étanchéité (23) sous forme de garniture étanche de l'arbre radial, d'au moins un élément centrifuge (24) ainsi que d'au moins un élément de recouvrement et d'aspiration (22), l'élément de recouvrement et d'aspiration (22) étant disposé du côté de l'engrenage devant l'élément d'étanchéité (23), et un collecteur d'huile lubrifiante (31 ) prévu dans la région de l'élément centrifuge (24) étant relié par au moins un canal (32) passant dans la direction de l'élément de recouvrement et d'aspiration à l'espace d'engrenage (33), qui est prévu dans la région de l'élément de recouvrement et d'aspiration du côté d'aspiration et environ au-dessus de la surface d'huile.

2. Système d'étanchéité selon la revendication 1, **caractérisé en ce que** l'élément de recouvrement et d'aspiration (22) a la forme d'une disque, et que la surface circonférentielle extérieure (27) de l'élément de recouvrement et d'aspiration (22) s'effile dans la direction de l'élément d'étanchéité (23).

3. Système d'étanchéité selon la revendication 1 ou 2, **caractérisé par** un labyrinthe (29), qui s'étend du côté d'engrenage entre l'élément de recouvrement et d'aspiration (22) et l'élément d'étanchéité (23).

4. Système d'étanchéité selon l'une des revendications 1 à 3, **caractérisé en ce que** l'élément centrifuge (24) comprend un système de canaux (30) sous forme d'un labyrinthe, qui transporte de l'huile lubrifiante dans la direction du collecteur d'huile lubrifiante (31 ).

5. Système d'étanchéité selon l'une des revendications 1 à 4, **caractérisé en ce que** l'élément centrifuge (24) a une section transversale angulaire, que la branche ayant une dimension radiale plus grande comprend le système de canaux (30), et que la branche (26) ayant une dimension radiale moins grande est prévue comme surface d'étanchéité pour la garniture étanche de l'arbre radial, qui a notamment plusieurs lèvres (23', 38).

6. Système d'étanchéité selon l'une des revendications 1 à 5, **caractérisé en ce que** l'élément centrifuge (24) est relié à l'arbre de sortie de moteur (18) par au moins un élément d'étanchéité, qui agit statiquement.

7. Système d'étanchéité selon l'une des revendications 1 à 6, **caractérisé en ce que** l'élément de recouvrement et d'aspiration (22) est solidaire avec l'élément centrifuge (24).

8. Système d'étanchéité selon l'une des revendications 1 à 7, **caractérisé en ce que** les composants, tels que l'élément centrifuge (24), l'élément d'étanchéité (23) ainsi que l'élément de recouvrement et d'aspiration (22) forment une unité de montage.

9. Système d'étanchéité selon l'une des revendications 1 à 8, **caractérisé en ce que** la surface d'huile (21) dans l'espace d'engrenage (33) est prévue au-dessous de l'extension circonférentielle la plus grande en état de montage de l'élément de recouvrement et d'aspiration (22).

10. Système d'étanchéité selon l'une des revendications 1 à 9, **caractérisé par** un dispositif de sécurité de transport (39), qui verrouille le canal (32) contre le collecteur d'huile lubrifiante (31) aux fins de transport et de montage, et qui peut être éliminé, quand l'installation de transport de personnes est installée.
